# FASCICULE DE BREVET EUROPEEN

(11) **EP 1 381 183 B1**
(45) Date de publication et mention de la délivrance du brevet: **29.08.2007**
(21) Numéro de dépôt: 03023236.7
(22) Date de dépôt: 17.03.2000
(51) Int. Cl.: H04L 9/32

(54) **Dispositif d'authentification d'un message**
Gerät zur Authentifizierung einer Nachricht
Message authentication device

(30) Priorité: 17.03.1999 FR 9903330
(43) Date de publication de la demande: 14.01.2004
(62) Demande divisionnaire de: 00910996.8
(73) Titulaire: Axalto S.A., 92120 Montrouge (FR)
(72) Inventeur: Fausse, Arnaud, Schlumberger Systémes, 78431 Louveciennes Cedex (FR)
(74) Mandataire: Cour, Pierre

(56) Documents cités:
- EP-A- 0 785 514
- WO-A-99/08415
- PRENEEL B: "CRYPTOGRAPHIC HASH FUNCTIONS" EUROPEAN TRANSACTIONS ON TELECOMMUNICATIONS AND RELATED TECHNOLOGIES, vol. 5, no. 4, 1 juillet 1994 (1994-07-01), pages 17-34, XP000460559 ISSN: 1120-3862
- LAVIGNE P.; MEYER D.: 'HIGH-RESOLUTION COLOUR GRAPHICS CARD' ELEKTOR ELECTRONICS vol. 12, no. 1, 1986, TUNBRIDGE WELLS, GB, pages 32 - 37, XP000001664

## Description

La présente invention concerne un procédé de vérification de signature d'un message.

L'invention trouve une application particulièrement avantageuse dans le domaine des télécommunications par transmission de messages sous forme de fichiers électroniques.

Le développement des télécommunications par échange à distance de fichiers électroniques (commerce électronique, courrier électronique, notarisation sous format électronique, etc) a provoqué l'avènement des technologies de traitement cryptographique dont le but est de sécuriser les messages transmis sur les réseaux de communication électronique face notamment aux attaques frauduleuses dont ils peuvent faire l'objet.

Parmi des opérations de traitement cryptographique d'un message, on peut citer le cryptage du message lui-même, dans sa totalité. Cependant, cette technique reste très lourde et souvent superflue, au moins dans les situations où le destinataire du message souhaite seulement s'assurer de l'identité de l'expéditeur et de l'intégrité du message qu'il reçoit en clair. C'est pour répondre à ces besoins qu'à été développé le concept de la signature électronique.

La signature électronique repose sur les principes suivants :
- L'auteur d'un message qui souhaite en authentifier l'origine, c'est-à-dire le signer, dispose d'un nombre secret, appelé clé privée Kpr, destiné à élaborer une signature électronique pour ledit message. Une autre clé, dite clé publique Kpu, est disponible à tout destinataire d'un message en provenance du même expéditeur de manière à pouvoir vérifier la signature électronique du message reçu. Ladite clé publique est généralement associée au nom de l'expéditeur et à d'autres données, durée de validité de la clé par exemple, dans une structure sécurisée appelée certificat. La sécurisation du certificat repose sur le fait que l'ensemble des données est lui-même signé par un « tiers de confiance » avec sa clé privée Kprtc et dont la clé publique Kputc est accessible à tous.
- L'élaboration de la signature se déroule en deux étapes. Tout d'abord, le message est réduit, on dit aussi « haché », au moyen d'un algorithme de réduction à sens unique, tels que ceux connus sous les noms de SHA1 ou MD5. Ensuite, le message ainsi réduit est crypté par un algorithme à clé publique, RSA, ECC par exemple, au moyen de la clé privée du signataire. Le résultat de ce cryptage constitue la signature.
- Le message en clair, la signature et, éventuellement, le certificat contenant la clé publique Kpu, sont envoyés au destinataire à travers le réseau de communication.
- Le destinataire doit alors vérifier que la signature reçue correspond bien au message et à son auteur. Pour cela, il réduit le message au moyen de l'algorithme de réduction à sens unique choisi par le signataire et décrypte la signature en utilisant la clé publique Kpu du signataire. La signature est reconnue valide si le résultat de la réduction du message est égal au résultat du décryptage de la signature. Le même procédé peut être utilisé pour vérifier les données contenues dans le certificat à l'aide de la clé publique Kputc du tiers de confiance qui l'a émis.

Il est intéressant de noter que la signature électronique est fonction du contenu du message et de la clé privée du signataire alors que la signature manuscrite identifie l'auteur mais est indépendante du message.

Afin de donner une valeur légale à la signature électronique, il est nécessaire de prouver certains faits. Entre autres :
- Le signataire doit disposer d'une clé privée dont personne d'autre ne dispose ;
- Le signataire doit être sûr du message qu'il signe ;
- Le destinataire doit être sûr que la vérification de signature est bien effectuée sur le message reçu ;
- Le destinataire doit être sûr du résultat de la vérification.

Si l'une des conditions ci-dessus n'est pas vérifiée, le signataire et/ou le destinataire peuvent contester la validité de la signature.

Or, la plupart des opérations de traitement cryptographique d'un message, notamment l'élaboration d'une signature électronique et sa vérification, sont effectuées dans les environnements informatiques de bureau. Cependant, les ordinateurs sont des systèmes ouverts sur lesquels il n'y a aucun contrôle de la sécurité, car l'utilisateur est libre d'installer tout logiciel de son choix. De même, pour les ordinateurs connectés aux réseaux de communication, de nombreux « virus » ou programmes non souhaitables peuvent être introduits à l'insu de l'utilisateur.

Il faut donc considérer l'environnement de l'ordinateur comme étant « non sûr ».

La situation la plus simple pour calculer une signature électronique, par exemple, pourrait consister à utiliser l'ordinateur comme moyen de stockage du message et des clés, et comme moyen d'élaboration de la signature. Cette solution est évidemment inacceptable car les clés stockées dans l'ordinateur peuvent être lues par un pirate à travers le réseau de communication et le même pirate pourrait utiliser à distance l'ordinateur pour calculer une signature sur un message que le propriétaire de l'ordinateur ne souhaiterait pas signer.

Il est donc souhaitable de pouvoir disposer d'un moyen sécurisé de traitement cryptographique qui, dans l'exemple de l'élaboration d'une signature, servirait au stockage de la clé privée du signataire et au calcul de la signature, le message restant stocké dans le moyen de stockage que constitue l'ordinateur par exemple.

Comme moyen sécurisé de traitement cryptographique, on peut utiliser une carte à microprocesseur, appelée aussi carte à puce. Dans le cadre de la signature d'un message, la carte à puce offre les services suivants :
- stockage de la clé privée du signataire ;
- calcul de la réduction du message ;
- cryptage du message réduit.

Un exemple typique d'architecture d'implantation de cette application comprend essentiellement un ordinateur auquel est connecté la carte à puce par l'intermédiaire d'un boîtier. Du point de vue informatique, les opérations se déroulent de la manière suivante :
- stockage du message dans un moyen de stockage de l'ordinateur ;
- édition du message sur l'ordinateur ;
- calcul du message réduit sur la carte à puce ;
- cryptage du message réduit par la carte, après vérification du code confidentiel introduit par le signataire au moyen du boîtier ;
- envoi du message et de la signature par la carte à l'ordinateur pour communication au réseau.

Avec ce système, le signataire est sûr que personne d'autre que lui ne peut utiliser sa clé privée pour signer. Cette solution est couramment utilisée et est suffisante pour un calcul de signature dont la portée ne vaut pas valeur légale, mais pour sécuriser un ensemble fermé d'ordinateurs, comme les réseaux internes de grandes entreprises.

Toutefois, on remarquera que le système de traitement cryptographique qui vient d'être décrit présente un certains nombres d'inconvénients :
- Le signataire n'est pas sûr du message qu'il signe puisqu'il n'est pas garanti qu'un virus dans l'ordinateur n'a pas modifié le message avant l'opération de réduction ;
- Le destinataire n'est pas sûr que la vérification est bien effectuée sur le message reçu puisqu'il n'est pas garanti qu'un virus dans l'ordinateur n'a pas fait apparaître le message correctement à l'écran alors que le message signé n'est pas celui visionné ;
- Le destinataire n'est pas sûr du résultat de la vérification puisqu'il n'est pas garanti qu'un virus dans l'ordinateur ne fait apparaître toute signature comme vérifiée alors qu'elle est fausse.

Aussi, le problème technique à résoudre par l'objet de la présente invention est de proposer un procédé de vérification de signature d'un message, le message, la signature, et un certificat ayant été envoyés par un signataire possédant une clef publique à un destinataire possédant un moyen de stockage de message, qui permette de remédier aux inconvénients des systèmes connus de traitement cryptographique, de manière à atteindre un niveau de sécurisation propre à conférer au message envoyé une valeur juridique incontestable et de manière à ce qu'un destinataire puisse vérifier l'identité du signataire et afin que ce dernier ne puisse révoquer le message qu'il a envoyé.

La solution au problème technique posé consiste, selon la présente invention, en ce que le procédé de vérification comporte les étapes selon lesquelles :
- on charge le message, la signature et le certificat, à partir du moyen de stockage dans un moyen sécurisé connecté audit moyen de stockage du destinataire,
- on vérifie le certificat dans le moyen sécurisé au moyen d'une clef publique d'un tiers de confiance associée audit certificat, et on transmet à un moyen de visualisation connecté directement au moyen sécurisé au moins une donnée de résultat de vérification,
- on vérifie la donnée de résultat sur le moyen de visualisation,
- lorsque le certificat est vérifié, on calcule dans le moyen sécurisé une réduction du message, et on recopie le message sur le moyen de visualisation au fur et à mesure de l'opération de réduction,
- on déchiffre dans ledit moyen sécurisé la signature avec la clé publique du signataire,
- on compare la signature déchiffrée avec la réduction effectuée, et,
- selon le résultat de la comparaison, on envoie un message, du moyen sécurisé au moyen de visualisation, indiquant que la signature est conforme ou non au message ou à la clé publique du signataire présentés.

Ainsi, on comprend qu'avec le procédé de vérification conforme à l'invention, le destinataire d'un message signé pourra avoir l'assurance que l'identité du signataire est authentique et que le message est intègre et ne pourra pas être révoqué puisqu'il verra apparaître sur le moyen de visualisation, un donnée de résultat de vérification du certificat, éventuellement le certificat, le message sur lequel la vérification de signature est effectuée, et le résultat de vérification de la signature, et, ceci sans que ces éléments ne circulent dans le moyen de stockage « non sûr », ordinateur par exemple, susceptible d'attaque frauduleuse, la fonction de visualisation (impression, affichage ou archivage) étant un environnement fermé considéré comme « sûr ».

La description qui va suivre en regard des dessins annexés, donnés à titre d'exemples non limitatifs, fera bien comprendre en quoi consiste l'invention et comment elle peut être réalisée.

La figure 1 est un schéma en perspective d'un dispositif d'authentification utilisé par un procédé conforme à l'invention.

La figure 2 est bloc-diagramme du dispositif d'authentification de la figure 1.

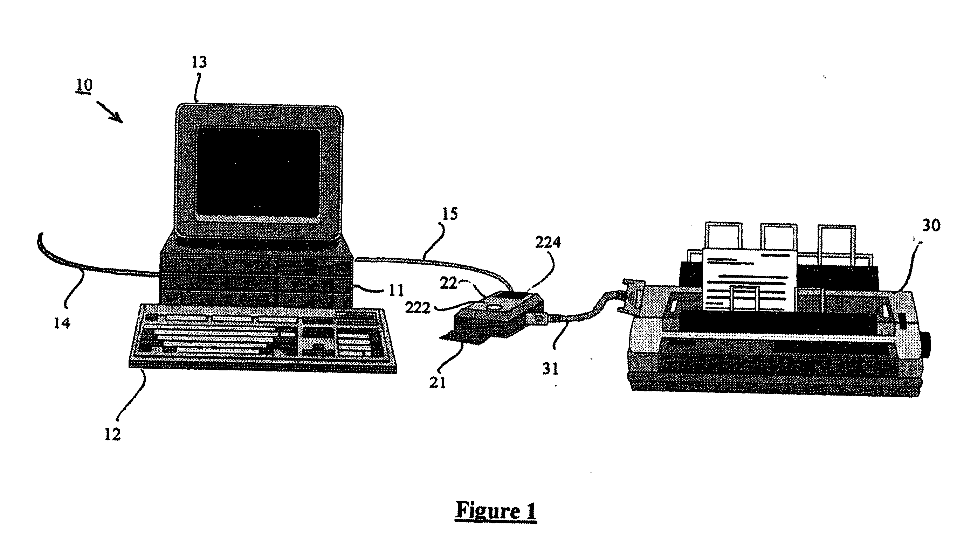

Le dispositif d'authentification représenté sur la figure 1 est destiné à authentifier un message lors d'une opération de traitement cryptographique dudit message.

Dans la suite de cette description, on envisagera deux types de traitement cryptographique, à savoir la signature d'un message à envoyer à un destinataire et, inversement, la vérification par un destinataire de la signature d'un message reçu. Bien entendu, d'autres opérations-de traitement cryptographique peuvent être mises en oeuvre au moyen de dispositif d'authentification de la figure 1, telles que le cryptage du message lui-même.

D'une manière générale, le dispositif d'authentification de message de la figure 1 comporte un moyen de stockage dudit message, constitué par exemple, par une mémoire dans l'unité centrale 11 d'un ordinateur 10. En fait, le message stocké est celui que l'auteur dudit message a composé au moyen du clavier 12 et qui doit faire l'objet d'une signature électronique. Normalement, le message composé apparaît sur l'écran 13 de l'ordinateur 10. L'unité centrale 11 communique avec l'extérieur, notamment avec les réseaux de communication, au moyen d'un câble 14 par lequel transitent les messages à signer et à envoyer ou les messages signés reçus.

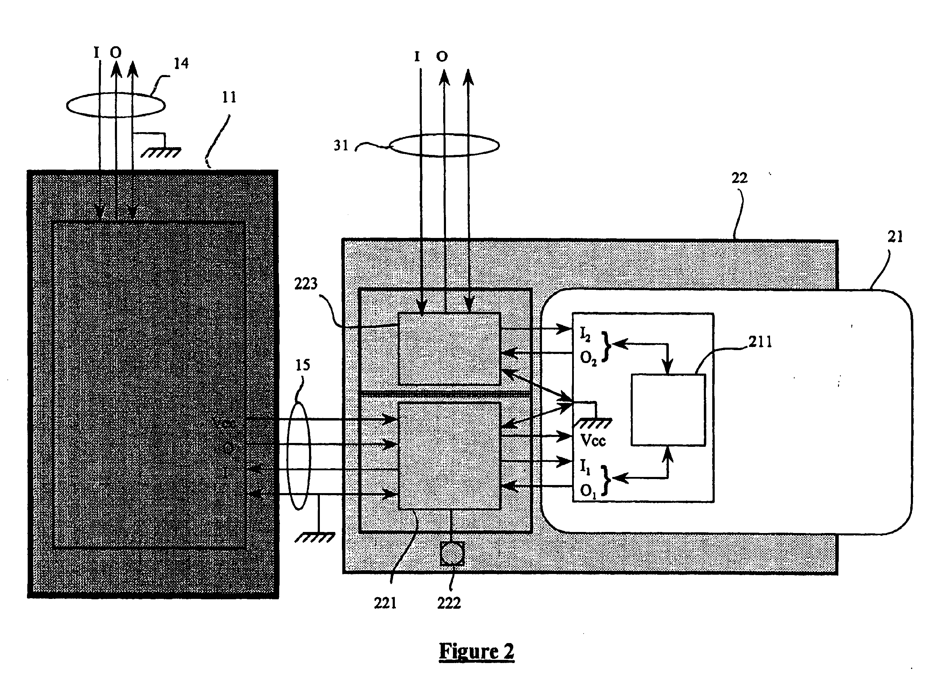

L'unité centrale 11 est reliée par un câble 15 de liaison à un moyen sécurisé 21 de traitement cryptographique, ici constitué par une carte à microprocesseur disposée dans un boîtier 22. Comme le montre la figure 2, ledit boîtier 22 comprend un circuit 221 d'interface appelé circuit de commandes/données. Le message devant être signé ou le message dont la signature doit être vérifiée, ainsi que les données nécessaires aux opérations de signature ou de vérification, arrivent du moyen 11 de stockage à la carte 21 à puce par ce circuit en respectant par exemple la norme ISO 7816. Le circuit 221 de commandes/données dispose d'une entrée permettant de recevoir en actionnant un bouton 222 un signal de déclenchement de l'opération de signature et les données sur un clavier 224 du boîtier, comme par exemple un code confidentiel.

D'autre part, la carte 21 à puce est connectée directement à un moyen 30 de visualisation, ici une imprimante mais qui pourrait être tout aussi bien un écran ou un moyen d'archivage, de manière à pouvoir transmettre au moins le message reçu de l'unité centrale 11, lors de l'opération du traitement cryptographique. La liaison entre la carte 21 à puce et l'imprimante 30 est réalisée par une interface 223 de visualisation du boîtier 22 par lequel passeront le message, et d'autres données devant être authentifiées.

L'architecture du dispositif d'authentification représentée aux figures 1 et 2 est donc basée sur une carte 21 à puce faisant le pont entre une zone « non sûre », l'ordinateur 10, et une zone « sûre », l'imprimante 30, la carte elle-même étant réputée « très sûre ».

Les entrées/sorties des circuits de commandes/données 221 et de visualisation 223 sont électriquement indépendantes lorsqu'aucune carte à puce n'est présente dans le boîtier 22. Lorsqu'une carte 21 est insérée dans le boîtier 22, la masse électrique est alors partagée entre les deux circuits 221 et 223. Les données issues de la carte 21 vers le circuit 223 de visualisation sortent par une sortie O₂ spécifique et physiquement distincte de la sortie O₁ utilisée pour le transfert des commandes/données. De même, les entrées I₁ et I₂ de commandes/données et de visualisation de la carte 21 sont physiquement distinctes. En fait, le seul lien logique entre les données circulant dans les circuits de commandes/données 221 et de visualisation 223 est le logiciel de la carte, réputé « très sûr ».

Dans le cas où la liaison entre la carte 21 à puce et l'imprimante 30 n'apparaîtrait pas suffisamment sécurisée, du fait notamment de son cheminement, il est prévu que la carte 21 puisse transmettre à l'imprimante 30 le message à traiter, et d'autres données, sous forme cryptée. Le mécanisme utilisé sera par exemple un algorithme symétrique, comme le triple DES, dont la clé peut être fixée ou négociée entre la carte 21 et le moyen 30 de visualisation.

Le déroulement d'une opération de signature d'un message est le suivant :
1. Le message à signer est édité dans le moyen 11 de stockage de l'ordinateur 10 et, éventuellement apparaît sur l'écran 13, puis le signataire demande à l'ordinateur de démarrer l'opération de signature.
2. L'ordinateur 10 transmet le message à la carte 21 via le circuit 221 de commandes/données par paquets de N octets afin d'être réduit par un algorithme de hachage (N = 64 si l'algorithme SHA1 est employé).
3. Lors de l'initialisation de l'algorithme de hachage, le logiciel 211 de la carte 21 envoie une commande d'initialisation du moyen 30 de visualisation qui permettra d'authentifier le message de manière sûre.
4. Lors de l'arrivée du message venant du moyen 11 de stockage, le logiciel 211 de la carte 21 en calcule en ligne la réduction et le recopie sur la sortie O₂ de visualisation, si bien que le moyen 30 de visualisation pourra faire apparaître, ici imprimer, le message au fur et à mesure de l'opération de réduction.
5. Lorsque la totalité du message a été envoyée à la carte 21 à puce par l'ordinateur, et avant d'effectuer l'opération de cryptage du message réduit, la carte se met en attente de réception d'un message de commande.
6. Le signataire a le temps d'authentifier le message imprimé, puis, s'il en accepte le contenu, compose ledit message de commande sous forme d'un code confidentiel saisi sur le clavier 224 du boîtier 22. Le circuit 221 de commandes/données génère lui-même la commande de l'opération de cryptage du message réduit en présentant la commande et le code confidentiel entré sur le clavier 224 par le signataire. L'ordinateur ne peut pas voir le contenu de cette commande. On pourra aussi disposer d'une entrée physiquement distincte sur la carte 21 à puce pour rentrer le code confidentiel.
7. La carte 21 à puce calcule la signature, renvoie la valeur à l'ordinateur 10 et, au besoin, au moyen 30 de visualisation. Le logiciel 211 de la carte 21 pourra aussi inclure d'autres données à visualiser, telles que et non limitativement le numéro de série de la carte, le nom du signataire, etc, si ces données sont présentes dans la carte 21.

Il est important de noter que l'opération de signature ne pourra être activée sur la carte 21 que suite à une réduction et l'entrée du code confidentiel en tant que message de commande du cryptage du message réduit. De plus, suite au calcul de signature, l'autorisation de signature est effacée, obligeant ainsi à entrer le code confidentiel volontairement pour toute opération de signature ultérieure.

S'agissant d'une opération de vérification de la signature d'un message, le message et sa signature sont envoyés au destinataire, dans l'unité centrale 11 de son ordinateur 10. Le destinataire désirera alors vérifier l'authenticité de la signature par rapport au message et au signataire. On se placera ici dans le cas où le certificat du signataire est également envoyé au destinataire.

Le destinataire doit effectuer deux types de vérification. D'une part, la vérification du lien entre l'identité du signataire et la clé publique de vérification, c'est-à-dire la vérification du certificat, et, d'autre part, la vérification de la valeur de la signature par rapport au message reçu et au certificat.

La séquence se déroule comme suit:
1. Le destinataire déclenche l'opération de vérification par le chargement dans la carte 21 à puce du certificat du signataire et de la clé publique du tiers de confiance qui a issu le certificat.
2. L'ordinateur 10 demande la vérification du certificat avec la clé publique du tiers de confiance. Cette commande déclenche l'initialisation du moyen 30 de visualisation par la carte.
3. La carte 21 vérifie le certificat et transmet au moyen 30 de visualisation, via le circuit 223 de visualisation, les données suivantes: validité du certificat (avec les dates), clé publique du tiers de confiance utilisée pour vérifier le certificat, clé publique du signataire, nom du signataire, et d'autres données pouvant être liées au contexte d'utilisation. Ainsi, un destinataire recevant un faux certificat, numériquement intègre mais issu par un faux tiers de confiance, s'en apercevrait d'une manière sûre en comparant la valeur visualisée de la clé publique du «faux tiers» avec celle du «vrai tiers» dont la clé publique est publiée notoirement. Ainsi, le destinataire peut authentifier l'identité du signataire, et, grâce à une date de validité du certificat, peut être sûr de la date à laquelle un signataire a signé le message et de la non obsolescence dudit certificat. On peut également avoir une donnée transmise, au moyen 30 de visualisation, qui est un message disant que le certificat est bon ou mauvais. Dans ce cas, le destinataire vérifie juste le message et en déduit qu'il a reçu un faux ou un vrai certificat. Dans un autre exemple, si le certificat est juste, on peut transmettre le certficat au moyen 30 de visualisation, le destinataire compare alors le certificat visualisé avec le certificat envoyé.
4. Lorsque le certificat est vérifié, l'ordinateur 10 déclenche la commande de l'opération de réduction et envoie le message à la carte 21.
5. Lors de l'arrivée du message venant du moyen 11 de stockage, le logiciel 211 de la carte en calcule en ligne la réduction et le recopie sur la sortie O₂ de visualisation, si bien que le moyen 30 de visualisation fera apparaître, ici imprimer, le message au fur et à mesure de l'opération de réduction. Le destinataire peut ainsi vérifier que le message dont la réduction est calculée est bien intègre.
6. Lorsque la totalité du message a été envoyée à la carte 21 à puce par l'ordinateur 10, ce dernier demande alors la vérification de signature. Il passe en paramètre la valeur de la signature reçue du signataire. Le logiciel 211 de la carte déchiffre la signature avec la clé publique du signataire et la compare avec le résultat de la réduction effectuée en étape 5. S'il y a égalité, la carte 21 envoie un message à l'ordinateur 10, indiquant que la signature est conforme au message et à la clé publique du certificat présenté. La carte envoie au circuit 223 de visualisation le message «Signature OK. Fin de vérification», qui est visible par le vérificateur. Si la signature n'est pas exacte, alors la carte envoie un message à l'ordinateur, indiquant que la signature est non conforme au message ou à la clé publique du certificat présenté. La carte envoie au circuit 223 de visualisation le message «Signature inexacte. Fin de vérification», qui est visible par le vérificateur.

Ainsi, par ce procédé, le signataire pourra difficilement révoquer un message qu'il a lui-même envoyé.

L'ensemble de ces actions doit se dérouler dans l'ordre indiqué sans incident, sinon, la séquence est annulée par la carte 21 à puce et il est nécessaire de tout recommencer.

Bien entendu, les envois ou chargements du message, du certificat et de la signature peuvent se faire simultanément préalablement à la vérification du certificat. De même, les envois de commandes de vérification du certificat, d'opération de réduction et de vérification de signature peuvent se faire au moyen d'une unique commande. Cette unique commande peut comprendre le message, le certificat et la signature. Par suite, le logiciel de la carte identifie cette unique commande et l'exécute en conséquence. Bien entendu, préférentiellement la clef publique du signataire est également chargée dans la carte 21 à puce lors du chargement du certificat. Dans le cas contraire, elle se trouve déjà dans la carte.

## Revendications

1. Dispositif d'authentification d'un message comportant un moyen (11) de stockage du message, un moyen (21) sécurisé connecté audit moyen de stockage, un moyen (30) de visualisation connecté au moyen sécurisé (21), **caractérisé en ce que** ledit moyen (21) sécurisé est constitué par une carte à microprocesseur munie d'entrées/sorties 11/01 de commandes/données pour la liaison vers ledit moyen de stockage et 12/02 de visualisation pour la liaison vers ledit moyen (30) de visualisation, physiquement distinctes.

2. Dispositif d'authentification selon la revendication 1, **caractérisé en ce que** le seul lien logique entre les commandes/données circulant entre ledit moyen sécurisé et le moyen (11) de stockage d'une part, et les données circulant entre ledit moyen sécurisé et le moyen (30) de visualisation d'autre part, est le logiciel de la carte.

3. Dispositif d'authentification selon l'une des revendications 1 ou 2, **caractérisé en ce que** ledit moyen (30) de visualisation est une imprimante, un écran ou un moyen d'archivage.

4. Carte à microprocesseur (21) susceptible d'être connectée à un moyen de stockage (11) d'un message et à un moyen de visualisation (30), ladite carte à microprocesseur étant sécurisée et comportant un moyen d'authentification, **caractérisée en ce qu**'elle comprend des entrées/sorties I1/01 de commandes/données pour la liaison vers ledit moyen de stockage et I2/02 de visualisation pour la liaison vers ledit moyen (30) de visualisation, physiquement distinctes.

5. Carte à microprocesseur selon la revendication 4, **caractérisé en ce que** le seul lien logique entre les commandes/données circulant entre ladite carte et le moyen de stockage d'une part, et les données circulant entre ladite carte et le moyen de visualisation d'autre part, est le logiciel de ladite carte.

6. Carte à microprocesseur selon l'une des revendications 4 ou 5, **caractérisée en ce qu**'elle comprend une entrée physiquement distincte pour rentrer un code confidentiel.

7. Boîtier (22) susceptible de recevoir un moyen (21) sécurisé d'authentification et susceptible d'être connecté à un moyen (11) de stockage d'un message à traiter et à un moyen (30) de visualisation, **caractérisé en ce qu**'il comporte d'une part, un circuit d'interface de commandes/données (221) réalisant une liaison entre le moyen sécurisé et le moyen (11) de stockage, et d'autre part, un circuit d'interface de visualisation (223) réalisant une liaison entre le moyen sécurisé et le moyen (30) de visualisation, les entrées/sorties desdits circuits de commandes/données (221) et de visualisation (223) étant électriquement indépendantes.

8. Boîtier selon la revendication 7, **caractérisé en ce que** le seul lien logique entre les données circulant dans les circuits de commandes/données (221) et de visualisation (223) est le logiciel dudit moyen (21) sécurisé.

9. Boîtier selon l'une des revendications 7 ou 8, **caractérisé en ce qu**'il comprend un clavier (224) permettant de saisir des données, par exemple un code confidentiel.

## Claims

1. Message authentication device comprising a message storage device (11), a secure device (21) connected to the said storage device, a display device (30) connected to the secure device (21), **characterized by** the fact that the said secure device (21) comprises a microprocessor card equipped with I1/O1 command/data inputs/outputs linked to the said storage device and viewing 12/02 linked to the said display device (30), which are physically distinct.

2. Anthentication device according to claim 1, **characterized by** the fact that the only logical link between the commands/data flowing between the said secure device and the storage device (11) on the one hand, and the data flowing between the said secure device and the display device (30) on the other, is the card's software.

3. Authentication device according to one of the claims 1 or 2, **characterized by** the fact that the said display device (30) is a printer, screen or archiving device.

4. Microprocessor card (21) that may be connected to a message storage device (11) and a display device (30), the said microprocessor card being secure and featuring a means of authentication, **characterized by** the fact that it comprises I1/O1 command/data inputs/outputs linked to the said storage device and I2O2 viewing inputs/outputs linked to the said display device (30), which is physically distinct.

5. Microprocessor card according to claim 4, **characterized by** the fact that the only logical link between the commands/data flowing between the said card and the storage device on the one hand, and the data flowing between the said card and the display device on the other, is the said card's software.

6. Microprocessor card according to one of the claims 4 or 5, **characterized by** the fact that it includes a physically distinct input to enter a secret code.

7. Casing (22) that may house a secure authentication device (21) and that may be connected to a storage device (11) for a message to be processed and a display device (30), **characterized by** the fact that it comprises on the one hand a command/data interface circuit (221) linking the secure device and the storage device (11), and on the other hand a display interface circuit (223) linking the secure device and the display device (30), the inputs/outputs of the said command/data circuits (221) and display circuits (223) being electrically independent.

8. Casing according to claim 7, **characterized by** the fact that the only logical link between the data flowing in the command/data circuits (221) and the display circuits (223) is the software of the said secure device (21).

9. Casing according to claims 7 or 8, **characterized by** the fact that it includes a keyboard (224) permitting data input, for example a secret code.

## Patentansprüche

1. System zur Authentifizierung einer Nachricht mit einem Speichermittel (11) der Nachricht, einem gesicherten Mittel (21), das mit dem Speichermittel verbunden ist, einem Visualisierungsmittel (30), das mit dem gesicherten Mittel (21) verbunden ist, **dadurch gekennzeichnet, dass** das besagte gesicherte Mittel (21) aus einer Mikroprozessorkarte besteht, die jeweils physisch getrennte Steuer/Daten-Eingänge/Ausgänge I1/O1 für die Verbindung zum Speichermittel und Visualisiezungs-Eingänge/Ausgänge I2/O2 für die Verbindung zum Visualisierungsmittel (30) umfasst.

2. Authentifizierungssystem nach Anspruch 1, **dadurch gekennzeichnet, dass** die einzige logische Verbindung zwischen den Steuerbefehlen/Daten, die einerseits zwischen dem gesicherten Mittel und dem Speichermittel (11) fließen, und den Daten, die andererseits zwischen dem gesicherten Mittel und dem Visualisierungsmittel (30) fließen, die Software der Karte ist.

3. Authentifizierungssystem nach Anspruch 1 oder 2, **dadurch gekennzeichnet, dass** das Visualisierungsmittel (30) ein Drucker, ein Bildschirm oder ein Archivierungsmittel ist.

4. Mikroprozessorkarte (21), die mit einem Speichermittel (11) einer Nachricht und einem Visualisierurigsmittel (30) verbunden werden kann, wobei die Mikroprozessorkarte gesichert ist und ein Authentifizierungsmittel umfasst, **dadurch gekennzeichnet, dass** sie jeweils physisch getrennte Steuer/Daten-Eingänge/Ausgänge I1/O1 für die Verbindung zum Speichermittel und Visualisierungs-Eingänge/Ausgänge I2/O2 für die Verbindung zum Visualisierungsmittel (30) umfasst.

5. Mikroprozessorkarte nach Anspruch 4, **dadurch gekennzeichnet, dass** die einzige logische Verbindung zwischen den Steuerbefehlen/Daten, die einerseits zwischen der Karte und dem Speichermittel fließen, und den Daten, die andererseits zwischen der Karte und dem Visualisierungsmittel fließen, die Software der Karte ist.

6. Mirkoprozessorkarte nach Anspruch 4 oder 5, **dadurch gekennzeichnet, dass** sie einen physisch getrennten Eingang für die Eingabe einer Geheimzahl umfasst.

7. Gehäuse (22), das ein gesichertes Authentifizierungsmittel (21) aufnehmen und mit einem Speichermittel (11) einer zu bearbeitenden Nachricht und einem Visualisierungsmittel (30) verbunden werden kann, **dadurch gekennzeichnet, dass** es einerseits eine Steuer/Daten-Schnittstellenschaltung (221) umfasst, mit der eine Verbindung zwischen dem gesicherten Mittel und dem Speichermittel (11) realisiert wird, und andererseits eine Visualisierungs-Schnittstellenschaltung (223), mit der eine Verbindung zwischen dem gesicherten Mittel und dem Visualisierungsmittel (30) realisiert wird, wobei die Eingänge/Ausgänge der besagten Steuer/Daten-Schaltung (221) und der Visualisierungsschaltung (223) elektrisch voneinander unabhängig sind.

8. Gehäuse nach Anspruch 7, **dadurch gekennzeichnet, dass** die einzige logische Verbindung zwischen den Daten, die in der Steuer/Daten-Schaltung (221) und in der VisualisierungsSchaltung (223) fließen, die Software des besagten gesicherten Mittels (21) ist.

9. Gehäuse nach Anspruch 7 oder 8, **dadurch gekennzeichnet, dass** es eine Tastatur (224) für die Eingabe von Daten, beispielsweise einer Geheimzahl, umfasst.
